Europäisches Patentamt
European Patent Office
Office européen des brevets

(11) Publication number: 0 007 307 A1

# EUROPEAN PATENT APPLICATION

published in accordance with Art. 158(3) EPC

(21) Application number: 78900310.0

(22) Date of filing: 19.12.78

Data of the international application taken as a basis:

(86) International application number: PCT/729/000617

(87) International publication number: WO 79/00443
International publication date: 26.07.79.

(51) Int. Cl.$^3$: A 01 N 11/04

(30) Priority: 27.12.77 JP 156529/77

(43) Date of publication of application: 23.01.80 Bulletin 80/2

(84) Designated Contracting States: DE FR GB

(71) Applicant: YUI, Saburo
12-7, Himonya 3-chome
Meguro-ku, Tokyo, 152(JP)

(72) Inventor: YUI, Saburo
12-7, Himonya 3-chome Mehuro-ku
Tokyo(JP)

(74) Representative: Ruffles, Graham Keith et al,
MARKS & CLERK 57-60 Lincoln's Inn Fields
London WC2A 3LS(GB)

## (54) AGRICULTURAL PESTICIDE INCLUDING LIME SACCHARATE AS CHIEF MATERIAL, AND METHOD OF PREPARING SAME.

(57) The invention relates to an agricultural pesticide including as its chief material lime saccharate obtained by bonding lime and saccharose, and further relates to a method of preparing such pesticide. A bordeaux solution obtained by mixing and reacting the agricultural pesticide of the invention with an aqueous solution of copper sulphate gives a clear, blue solution which, upon being spread over agricultural crops, does not remain as residue and undergoes a reduction in toxicity. It is also possible to simplify the adjustment and preparation of the bordeaux solution. In addition, a mixture of the lime saccharate (strongly alkaline) with an aqueous solution of an acidic agent for spreading over crops can be used as an agent for adjusting pH in agriculture. Moreover, an aqueous solution of the water-soluble lime saccharate is effective for use as a calcium replenisher to be applied to the leaves of crops.

EP 0 007 307 A1

## Technical Field

The present invention relates to agricultural chemicals in which the essential main component is calcium saccharate.

More particularly, the present invention relates to agricultural fungicides consisting of bordeaux mixture obtained by reaction of calcium saccharate with an aqueous solution of copper sulfate, a pH controlling agent composed of calcium saccharate which is used by adding to acidic spraying plant nutrients or fungicides or a calcium supplementing agent which is sprayed on plants in an aqueous solution of calcium saccharate.

## Background Art

Heretofore, milk of lime or an aqueous solution of calcium hydroxide has been utilized for a large number of agricultural chemicals. For example, bordeaux mixture prepared by mixing and reacting milk of lime or an aqueous solution of calcium hydroxide with an aqueous solution of copper sulfate has an reliable activity and a long maintaining ability, so that bordeaux mixture has been broadly used from old. However, since milk of lime is used, noticeable chemicals traces are remained on the sprayed plant surface, for example, on grape fruit surface to produce stained fruit.

When the stain is wiped, the white powders (referred to as blooms) showing the freshness of the fruits are removed and the fruit grains may be dropped by the wiping operation, and further light is shut out by the chemicals traces sprayed on plant surfaces, so that the photosynthesis on the leaf surfaces is retarded.

One of the reasons why various substitutive copper agents, such as basic copper chloride, cuprous oxide, copper silicate, copper phosphate, basic copper acetate, ammonia copper, copper carbonate and the like have been developed in spite of secure activity of bordeaux mixture, is based on the fact that the preparation of bordeaux mixture is troublesome.

Namely, quick lime is converted into slaked lime milk by using a long time and the slaked lime milk is cooled and then filtered through a fine sieve and the cake is removed to prepare milk of lime and a separately prepared large amount of aqueous solution of copper sulfate is gradually added thereto and then the resulting mixture is stirred, so that a fairly long time and much labor are needed.

Furthermore, the conventional usual bordeaux mixture is apt to cause precipitation, so that the mixture should be always stirred during the spraying operation and further hard particle of lime cakes are necessarily mixed and these particles wear pump system, particular nozzles.

Usual bordeaux mixtures cause acute phytotoxicity depending upon the plant kind and the growing stage.

Heretofore, in order to avoid the noticeable stain due to bordeaux mixture, bordeaux mixture using an aqueous solution of calcium hydroxide, that is supernatant liquid dissolving a slight amount of calcium hydroxide (0.133% by weight dissolved in water at 10°C as calcium oxide, when the temperature is raised, the dissolved content reversely decreases) has been used but the absolute amount of calcium hydroxide dissolved therein is small, so that a sufficient concentration of bordeaux mixture can not be obtained and the fungicidal activity is not satisfied, and although the chemicals traces on the sprayed plant surface is fiarly favorably improved as compared with those of the usual bordeaux mixture, as seen from the fact that the precipitating flock has been already formed upon preparation, the chemicals traces still ramain and the activity is inferior to the usual bordeaux mixture and the adhesive property is inferior.

Furthermore, there is a drawback in the fact that a long time is needed for obtaining the supernatant liquid.

Saccharated bordeaux mixture has been known from old. This is prepared as follows. Usual bordeaux mixture is prepared and then a half amount of the amount of calcium oxide used, of sugar is mixed and dissolved in the prepared bordeaux mixture. The saccharated bordeaux misture aims at to improve the adhesion to plants having low adhesion when

ring only usual bordeaux mixtures, by utilizing ... ss of sugar, but the stain problem is not solved and the effects of usual bordeaux mixtures are maintained.

Recently, the saccharated bordeaux mixture has not been used by advance of spreader of surfactant (explained in detail hereinafter).

Other many agricultural chemicals as mentioned above have been developed in place of bordeaux mixture but the chemicals which are not inferior to the bordeaux mixtures in the activity against various farmful fungi and do not remain the chemicals trace, have never been realized.

In addition, milk of lime and an aqueous solution of calcium hydroxide are utilized as pH controlling agents for acidic leaf spraying nutrients or fungicides. Namely, when only aqueous solutions of these agents are used, the phytotoxicity may be caused, so that milk of lime or an aqueous solution of calcium hydroxide is added thereto to increase pH value to the safe range.

However, milk of lime stains plants and the aqueous solution of calcium hydroxide is small in the amount of calcium oxide dissolved, so that the buffering ability is low and the ability for correcting pH is poor.

Moreover, when milk of lime or an aqueous solution of calcium hydroxide is used as calcium supplementing agent for spraying on leaf surfaces, the absolute amount of the dissolved calcium is small, so that the effect is low and

these substances are not practically used.

The first object of the present invention is to develop the activity of conventional bordeaux mixture wherein milk of lime or an aqueous solution of calcium hydroxide is used, or the higher activity than said bordeaux mixture, by using calcium saccharate as one component of bordeaux mixture, and to solve the problem of stainning and shutting out sun light due to the chemicals traces formed by spraying brodeaux mixture on plant surfaces to complete the photosynthesis.

Another object is to save troublesome labor for preparing bordeaux mixture and to make possible spraying of bordeaux mixture at the desired time.

A further object is to decrease the intrinsic phytotoxicity of bordeaux mixture, to improve the function for protecting plants and to give good influence to the growth of plant owing to calcium saccharate.

An additional object is to obviate clog of nozzles and wear of pump, particularly nozzles to improve the durability thereof, and to prevent sedimentation of the calcium component to decrease the labor for stirring the mixture during spraying.

The second object of the present invention is to be use calcium saccharate as pH controlling agent by adding calcium saccharate to acidic aqueous solution to be sprayed as the nutrients or fungicides on plants to adjust pH of said aqeuous solution.

The third object is that calcium saccharate acts as calcium supplementing agent by spraying an aqueous solution of water soluble calcium saccharate on plant surfaces to absorb calcium from leaf surfaces.

Disclosure of Invention

In the present invention, the aimed object is attained by using calcium saccharate obtained by reacting calcium oxide with sucrose and reacting with or dissolving in the desired chemicals in place of milk of lime or an aqueous solution of calcium hydroxide.

Quick lime is reacted with water of form slaked lime and a part of slaked lime is dissolved in water but the dissolved amount is very small (0.133% by weight in water at 10°C). However, calcium oxide dissolves in an aqueous solution of sucrose and reacts therewith in a relatively large amount to form calcium saccharate solution.

For example, calcium oxide is dissolved in an aqueous solution of sucrose having a concentration of 30% at 12°C in an amount of 8.4%, which is about 63 times as high as in the case of water. In general, the higher the concentration of sucrose and the lower the temperature, the larger the rate is. Accordingly, for production of calcium saccharate, the weight ratio of sucrose to be bonded and quick lime have been firstly predetermined and the aqueous solution of sucrose and the milk of lime obtained from quick lime by using a sufficient amount of water have been made to be the

solutions having the concentration range wherein the handling is easy and then both the solutions have been separately cooled nearly to 0°C.

Then, both the solutions are simultaneously and rapidly mixed and stirred. In this case, the heat generation more or less occurs and the temperature is raised, so that after thoroughly mixing the cooling is continued and the stirring is mildly conducted. After about 12 hours, the reaction sufficiently proceeds and the first milky white opaque liquid becomes translucent and a viscous aqueous calcium sacchalate solution is obtained.

This reaction is shown by the following formulae

$$Ca(OH)_2 + C_{12}H_{22}O_{11} \rightarrow H_2O + \underset{\text{(water soluble)}}{C_{12}H_{22}O_{11}\cdot CaO} \quad \ldots (1)$$

$$2Ca(OH)_2 + C_{12}H_{22}O_{11} \rightarrow 2H_2O + \underset{\text{(water soluble)}}{C_{12}H_{22}O_{11}\cdot 2CaO} \quad \ldots (2)$$

$$3Ca(OH)_2 + 2C_{12}H_{22}O_{11} \rightarrow 3H_2O + \underset{\text{(water soluble)}}{2C_{12}H_{22}O_{11}\cdot 3CaO} \quad \ldots (3)$$

The reaction of an aqueous solution of sucrose and milk of lime at a temperature lower than room temperature follows to the above formulae and among them, the reaction of the formula (2) is predominant.

When the aqueous solution of calcium saccharate is heated to a temperature lower than 80°C to dehydrate the saccharate and, for example when said solution is

atomization-dried in a spray drier, the white powder form of water soluble calcium saccharate is obtained.

Furthermore, when the above described calcium saccharate is heated to a temperature of more than 80°C-90°C, water insoluble tricalcium saccharate shown by the following formulae is obtained.

$$3(C_{12}H_{22}O_{11}\cdot CaO) \rightarrow 2C_{12}H_{22}O_{11} + C_{12}H_{22}O_{11}\cdot 3CaO \quad \ldots (4)$$

(water insoluble)

$$3(C_{12}H_{22}O_{11}\cdot 2CaO) \rightarrow C_{12}H_{22}O_{11} + 2(C_{12}H_{22}O_{11}\cdot 3CaO) \quad .. (5)$$

(water insoluble)

These calcium saccharates become white powders through sufficient drying, have no hygroscopicity and are stable and durable for a long period of storage.

For the preparation of calcium saccharate bordeaux mixtures, any one of the above described water soluble calcium saccharates and the water insoluble calcium saccharate may be used but the water soluble calcium saccharate is more preferable in view of maintenance of clearness, no trace of the sprayed solution and removal of the stain.

Calcium saccharate is formed by bonding with sucrose but has no sweatiness and gives a strong stimulation (high alkalinity), and is soluble in water but is rather difficultly soluble in cold water and is readily soluble in hot water.

When the calcium saccharate dissolved in water looses water by evaporation, the calcium saccharate gradually

increases the viscosity and becomes a substance of a concentrated honey form having high sticking and adhering force in a small amount of water.

When calcium saccharate is put together with an acid, CaO in calcium saccharate is unbonded and transfers to the acid side.

Now, consideration will be made with respect to the case where bordeaux mixture is prepared by using calcium saccharate. A solution of copper sulfate in water is shown by following formula,

$$CuSO_4 + 2H_2O \rightleftarrows Cu(OH)_2 + 2H^+ + SO_4^{2-} \quad \text{..... (6)}$$

Copper hydroxide $Cu(OH)_2$ is more or less amphoteric but the solution of copper sulfate in water shows an acidic reaction due to sulfuric acid. Accordingly, when this solution reacts with calcium saccharate, calcium saccharate unbonds sucrose and CaO as mentioned above and CaO transfers to the acid side and reacts with copper sulfate. This shows that the reaction for preparing bordeaux mixture occurs.

An explanation will be made with respect to the reaction for preparation of bordeaux mixture hereinafter.

Such a reaction has been considered as follows when bordeaux mixture has been found (1878 year).

$$CuSO_4 + Ca(OH)_2 = Cu(OH)_2 + CaSO_4 \quad \text{..... (7)}$$

and copper hydroxide $Cu(OH)_2$ has the fungicidal activity.

However, it has been found that such an assumption is not correct and a large number of proposals have been made.

Recently, it has been reported in "Physicochemical Study of Agricultural Chemicals" 1951, by Seiko Takahashi, Sankyo K.K., Japan, that when copper sulfate reacts with calcium oxide, if these substances react in the minimum amount of calcium oxide necessary for neutralization of copper sulfate, that is in the weight ratio of copper sulfate to calcium oxide 100:16.8 (molar ratio of $CuSO_4 \cdot 5H_2O$:CaO being 4:3),

$$4CuSO_4 \cdot 5H_2O + 3CaO \rightarrow CuSO_4 \cdot 3Cu(OH)_2 + 3CaSO_4 \cdot 2H_2O \quad \ldots (8)$$

The formed $CuSO_4 \cdot 3Cu(OH)_2$ is a greenish stable neutral salt and is insoluble in water and has substantially no fungicidal activity. It has been proved by microanalysing precipitates of bordeaux mixture and studying the physical properties thereof that as an amount of calcium oxide to be added is increased, the basic degree of the formed copper sulfate complex salt becomes higher and if the molar ratio is 3: more than 13, that is calcium oxide is present in the weight ratio of copper sulfate to calcium oxide being 100: more than 36.4 (the weight ratio of copper sulfate to calcium oxide of the practically used bordeaux mixture being 100: more than 50 in any case and the above described relation being necessarily satisfied), the reaction formula s in the

following formula (9) is established and copper sulfate complex salt having the given composition is formed.

$$8CuSO_4\cdot 5H_2O + XCaO \rightarrow CuSO_4\cdot 7Cu(OH)_2\cdot 6Ca(OH)_2 + (X-13)Ca(OH)_2 + 7CaSO_4\cdot 2H_2O \quad ..... (9)$$

$$X \geq 13$$

It has been mentioned that this complex salt having the given composition $CuSO_4\cdot 7Cu(OH)_2\cdot 6Ca(OH)_2$ is a blue unstable basic salt and is gradually changed to a substance having a lower basic degree by acid function due to $CO_2$ in air or by secretions of noxious fungi, and enzyms and finally becomes stable neutral $CuSO_4\cdot 3Cu(OH)_2$ but in the course of the variation, copper salt and copper ion having a high solubility are caused and these substances have a high fungicidal activity. This theory has been generally supported.

When it is permitted to react calcium saccharate with an aqueous solution of copper sulfate, in the case where calcium saccharate is used in such an amount that the molar ratio of copper sulfate to CaO in calcium saccharate is 8: more than 13 (the practical compounding ratio is always satisfied), the reaction follows to the above formula (9) and when $C_{12}H_{22}O_{11}\cdot CaO$ is considered as a representative of calcium saccharate for simplification, the following reaction formula is obtained.

$$8CuSO_4 \cdot 5H_2O + XC_{12}H_{22}O_{11} \cdot CaO \rightarrow CuSO_4 \cdot 7Cu(OH)_2 \cdot 6Ca(OH)_2$$
$$+ (X-13)C_{12}H_{22}O_{11} \cdot CaO + 7CaSO_4 \cdot 2H_2O + 13C_{12}H_{22}O_{11}$$
..... (10)

When comparing the above formula (9) with the formula (10), if CaO is added in an excess amount (X>13), in the formula (9) the excess calcium is present in the form of $Ca(OH)_2$, while in the formula (10), an excess amount of calcium saccharate and free sucrose are present.

The aqueous solution of calcium saccharate shows a high alkalinity of the same degree as in milk of lime and this acts to control an amount of copper dissolved after spraying and the function prevents the phytotoxicity against plants which are weak against copper ion in the same manner as in an excessive calcium bordeaux having an excess amount of $Ca(OH)_2$.

Furthermore, pH and the buffering ability of the thus prepared bordeaux mixture due to calcium saccharate are the completely same as those of usual bordeaux mixtures having the composition of copper sulfate and calcium oxide having the corresponding amounts.

The important facts are that as seen from the above formula (10), there is an excess amount (X>13) of water soluble calcium saccharate always, and exists and surrounds the complex salt molecules, and also sucrose is so.

When calcium saccharate is shown by the above

formulae (2) and (3), the free sucrose molecules become 13/2 and 13×2/3 respectively. When calcium saccharates are the insoluble calcium saccharates of the above formulae (4) and (5), the complex salt molecule is surrounded with 13/3 sucrose molecules.

Thus, when bordeaux mixture is prepared by using calcium saccharate, (X-13) calcium saccharate molecules surround around one complex salt molecule $CaSO_4 \cdot 7Cu(OH)_2 \cdot 6Ca(OH)_2$ and 13-13/3 sucrose molecules coexist similarly. This means that the molecular dispersion phase of the complex salt molecules is maintained and this is the fundamental principle that the bordeaux mixture obtained by using calcium saccharate becomes a blue clear solution.

Among the above described calcium saccharates, the larger the amount of the water soluble calcium saccharate, the better the clear degree is, and the clear degree is not substantially varied with lapse of time and when only the water soluble calcium saccharate is used, the solution is quite clear.

In the case of the above mentioned bordeaux mixture using milk of lime, complex salt molecules agglomerate with each other and further catch calcium hydroxide to form large flocks, whereby sediments are formed.

In the present invention, as mentioned above, calcium saccharate and free sucrose prevent the agglomeration of the complex salt molecules, keep the complex salt molecules

in the molecular form and maintain the dispersion phase, whereby the actual blue clear solution of complex salt ($CuSO_4 \cdot 7Cu(OH)_2 \cdot 6Ca(OH)_2$) is formed.

Since the formed complex salt in the calcium saccharate bordeaux is the same as that of the conventional bordeaux mixture, the activity is fundamentally equal but the calcium saccharate bordeaux mixture is distinctly different from the conventional bordeaux mixture in view of no stain of sprayed plant surfaces and other points.

Now, saccharated bordeaux mixture has been already known. An explanation will be made with respect to the difference of the saccharated bordeaux mixture from the calcium saccharate bordeaux mixture according to the present invention.

Saccharated bordeaux mixture has been firstly introduced on the Agricultural Experiment Station Report No. 20 (1910) of Ministry of the Agriculture and Forestry of Japan and the detailed preparation process has been published on March, 1916 in Japan.

Firstly, the conventional bordeaux mixtures from 8-8 system to 6-6 system were prepared. After the preparation, a half amount based on the amount of CaO used, of sucrose was added thereto and dissolved therein. The thus prepared saccharated bordeaux mixtures were applied in the same manner as in the conventional bordeaux mixture. However, these bordeaux mixtures had higher adhesion, so

that the interval of spraying time can be prolonged.

This saccharated bordeaux mixture is suitable for plants in which the adhesion of the conventional bordeaux mixture is poor and is mainly aimed at improvement of the adhesion, but the adhesive which is a surface active agent, has presently progressed, so that the saccharate bordeaux mixture has not been practically used.

Then an explanation will be made with respect to the comparison of the calcium saccharate bordeaux mixture (referred to as "A" hereinafter) according to the present invention and the saccharated bordeaux mixture (referred to as "B") hereinafter.

(1) A is the bordeaux mixture obtained by adding calcium saccharate prepared by previously bonding sucrose to CaO to an aqueous solution of copper sulfate, while B is prepared by adding sucrose to the already prepared conventional bordeaux mixture.

Even if the amounts of calcium oxide, copper sulfate and sucrose in the respectively prepared bordeaux mixture are allowed to be equal, the distinct difference appears in the results.

For example, in the preparation of 5-5 system of bordeaux mixture, an amount of sucrose is allowed to be [illegible] of CaO used.

[illegible] milk of lime are firstly [illegible] and thoroughly stirred to dissolve CaO as far as

possible and then a solution of copper sulfate dissolved in the remaining amount of water is added thereto and stirred to prepare a bordeaux mixture (referred to as "A'").

When the bordeaux mixtures A' and B are concurrently prepared and left to stand, the sedimentation amount in A' is less than 1/2 of that in B and in the color of the sediments, A' is somewhat white, while B is bluish. As seen from the fact that the sedimentation amount in A' is less than that in B and the color of the sediment in A' is white, the blue complex salt having the given composition, which is the active component, is dispersed and maintained in the upper solution portion.

Of course, it can be easily presumed from the condition of the process for preparing calcium saccharate that in A', sucrose and milk of lime are firstly mixed but are not complete by converted into calcium saccharate and a part of these substances is merely bonded, but this apparently proves that the formation of calcium saccharate improves the ability for dispersing and maintaining the complex salt having the given composition, which is the main component of bordeaux mixture and that the use of calcium saccharate has the important meaning.

(2) In A, in order to obtain the completely clear bordeaux mixture, the water soluble calcium saccharate is used, but in this case, the amount of sucrose is at least 3 times as many as CaO, while the amount of sucrose in A is

only 1/2 of CaO and in B, the tendency of formation of the clear solution is not observed.

(3) A, as evaporation proceeds after spraying, prevents the complex salt from separation from plant surfaces and whitening owing to the high adhesion of the excessive calcium saccharate in the solution, and further is a blue clear complex salt solution, so that the chemicals traces do not remain and the stain problem does not substantially occur, while B is not different from the conventional bordeaux mixture and causes the separation and whitening and remains noticeable chemicals traces and stains.

(4) The process for preparing A is most simple. In A, only one vessel is used and the components to be added are fed in turn and stirred in a short time, so that the preparation of A can be considerably more simplified than that of the conventional bordeaux mixture. While, in B, the addition of sucrose and the stirring of the mixture are added to the preparation step of the conventional bordeaux mixture, so that B is more troublesome.

(5) A uses the already bonded water soluble calcium saccharate, so that A is the actual blue clear solution and gives no harmful action to pump system, while B uses milk of lime, so that CaO residue inevitably remains and the pump system, particularly the nozzle is considerably warn and clogged.

(6) When in A, the water soluble calcium saccharate is

used, the excessive water soluble calcium saccharate in the bordeaux mixture has the fertilizing function to plants as water soluble calcium salt and gives the preferable fertilizing function to the early, middle and last stages of growth of plants and improves the quality and the yield.

The excessive calcium hydroxide in B is not substantially water soluble and can not expect the fertilizing function of calcium.

As mentioned above, the saccharated bordeaux mixture and the calcium saccharate bordeaux mixture according to the present invention are noticeably different in the functional theory and the effectiveness and the calcium saccharate bordeaux mixture is novel and more excellent in the practical effectiveness than the prior saccharated bordeaux mixture.

## Best Mode of Carrying Out the Invention

The bordeaux mixture using the water soluble calcium saccharate is blue clear and even when the aqueous dispersion of said bordeaux mixture is sprayed on plants and dried in air, any chemicals trace is not found. When the variation owing to lapse of time is observed, although the whitened chemicals traces tend to be more clarified in the conventional bordeaux mixture, this tendency is not found in the bordeaux mixture using the above described calcium saccharate.

The fact that after spraying, any chemicals traces

are not remained, means that the sprayed plants are not prevented from radiation of sun light and the sound assimilation of plants is conducted.

The inventors have confirmed by the microscopic observation that it is difficult to distinguish the spraying of the conventional bordeaux mixture dispersion on plant surfaces immediately after spraying but when the sprayed dispersion is evaporated and dried, bluish whitened traces appear at once and this is based on the following reason. When the sprayed dispersion is evaporated and dried and water is lost, the agglomerating force of the chemicals predominates over the adhering force of the chemicals to plants and the chemicals separate from plant surfaces to form air layer between the chemicals and plant surfaces, which becomes the separated layer and is whitened, and the intrinsic color of the chemicals is superposed thereon.

In the bordeaux mixture using the water soluble calcium saccharate, a superfluous water soluble calcium saccharate remains always excessively and even if the sprayed bordeaux mixture is evaporated and dried on plant surfaces, the complete drying is not effected and a certain amount of water is contained, so that as mentioned above the calcium saccharate is high in the stickiness and the adhering force to plant surfaces endures the agglomerating force of the chemicals due to drying and the adhering is maintained and the whitening phenomenon owing to formation of the air layer

due to separation is prevented.

Furthermore, the water soluble calcium saccharate is near colorless and the complex salt is a blue clear substance, so that in practice, the chemicals traces are not visible.

Furthermore, even in the bordeaux mixture using the water soluble calcium saccharate, when an amount of the excessive water soluble calcium is small and the size of the bordeaux mixture drop on the sprayed plant surfaces is large, the agglomerating force of the above described chemicals upon drying becomes higher and on the other hand, the adhering force due to the water soluble calcium saccharate becomes lower because of use of the small amount and the chemicals may separate from the plant body and the whitening due to formation of air layer may occur.

Accordingly, in order not to cause such a phenomenon and to surely contain the excessive water soluble calcium saccharate content, the amount of CaO contained in calcium saccharate is more than 60% by weight based on the copper sulfate amount, preferably the same amount as the copper sulfate amount and it is desirable that the spraying is effected in such a manner that plants are covered in micro-atomizing state and it should not be done to make the spraying amount to be unnecessarily larger and to permit the chemicals dispersion drops on plant surfaces to form large granules.

The larger the weight ratio of sucrose to calcium oxide in the water soluble calcium saccharate, the higher the adhesion and the more difficult the occurrence of the whitening due to separation are.

However, when the weight ratio becomes larger, after the sprayed bordeaux mixture is evaporated and dried on plant surfaces, a certain degree of luster is apt to appear on the sprayed surface, so that in order to restrain this tendency and prevent formation of chemicals trace and considering the economical view, it has been found from practical experience that the above described weight ratio is preferred to be 3-5, particularly about 4.

In addition, even if the whitening chemicals traces are formed due to formation of air layer between the chemicals and the plant body, it has been confirmed by field test that such traces disappear owing to growth of plant, rain and dew, and lapse of day, and that the luster after the above described evaporation and drying relatively rapidly disappears by laspe of day because of absorbing to plant also rain and dew.

In general, it has been proved by many experiments that in fungicides, as the particles stuck on plant surfaces are more fine and the fungicides stick on plant surfaces more uniformly, the fungicidal activity is higher. The fungicide according to the present invention which is homogenized in molecular dispersed state, more complies with

the above described theory than the usual bordeaux mixture in which the complex salt molecules agglomerate to form flock. Furthermore, free sucrose and the water soluble calcium saccharate promote the wettability and adhering ability to plant surfaces and stick the fungicide on plant surfaces more uniformly, so that the higher fungicidal activity than the conventional bordeaux mixture can be apparently obtained. In fact, any spreader is not needed.

The water soluble calcium saccharate and the free sucrose are water soluble, so that it may be considered that calcium saccharate bordeaux moves and flows and is lost by rain and the like and the adhesion is lower than usual bordeaux mixture, but when the state where calcium saccharate bordeaux mixture actually sticks on plant surfaces, is observed by a microscope, the calcium saccharate bordeaux enters into leaf hairs closely growing on the grape leaf back surface as in the state that water drop is absorbed into sponge and a film-shaped complex salt having a given composition is precipitated and fixed on the uneven leaf surface and arround leaf hairs, so that the calcium succharate bordeaux mixture resists to rain, dew and wind different from the mere suspension in which fine particles of chemicals mount on leaf surface, and the adhesion is far superior to the usual wettable powder.

Free sucrose is hardly adsorbed in plant in molecular state but when boric acid is present, sucrose

acid, potassium primary phosphate, calcium primary phosphate, magnesium sulfate, zinc sulfate, iron sulfate, manganese sulfate and the like, or fungicides, such as copper acetate. These chemicals are acidic and when these chemicals are sprayed on plant surfaces, there is danger that phytotoxicity is caused on plants, so that these chemicals are generally used by mixing with milk of lime, but the use of milk of lime causes stain and shutting light as in the conventional bordeaux mixture.

An aqueous solution of calcium saccharate is same in alkalinity and the buffering ability as in milk of lime and even if said aqueous solution is added to the above described salts, plants are not stained in view of the practical view point and said aqueous solution is very effective depending upon the applying stage (for example, before covering fruits with bags or prior to shipping ornamental plants).

The above described nutrient salts and fungicides may be used by adding to calcium saccharate bordeaux mixture.

Alternatively, the aqueous solution of water soluble calcium saccharate alone may be used as calcium supplementing source from plant surface.

Namely, it has been found that the aqueous solution of water soluble calcium saccharate afects favorably upon growth of early stage, middle stage and late stage of plants.

The absorption of the water soluble calcium

bonds to boric acid in the form of sucrose borate, which is considerably rapidly absorbed and spread in plants, so that the remained free sucrose can be recovered by plants.

It has been confirmed from field test that free sucrose and calcium saccharate can prevent soft young plants from phytotoxicity.

For example, grape young fresh leaves are relatively weak against bordeaux mixture, so that even in the conventional usual bordeaux mixture having a concentration of 2-2 system, the phytotoxicity often occurs at the leaf developing stage, but in calcium saccharate bordeaux mixture, even in a higher concentration of 3-3 system, no phytotoxicity occurs and the sound growth can be attained, so that it can be seen that calcium saccharate bordeaux mixture has the protective function.

Even in a higher concentration of 8-6 system, which can prevent glomerella cingulate which propagates from rainy season to the later season and gives harm to harvest, any acute phytotoxicity is not observed. Furthermore, it has been confirmed by the field test that the degree of generation of chronic phytotoxicity due to the result of repeated spraying is less than 1/2 of that when the conventional bordeaux mixture is used.

Calcium saccharate can be used together with at least one of the other chemicals than the above described bordeaux mixture, for example, nutrient salts, such as boric

saccharate of water soluble calcium salt are rapid and effective in plants and the most noticeable characteristic appears in increase of the thickness of leaf and plants grow soundly and this results in the high quality and yield of harvest.

The fertilizing function at the middle and late stages appears in the promotion of enlargement and ripeness of harvest.

The spraying of the water soluble calcium saccharate alone on leaf surface has of course the fertilizing function but it has been confirmed by field test that a superfluous water soluble calcium saccharate in calcium saccharate bordeaux mixture or pH correcting solution in acidic leaf spraying agent also give the same function as in the sole use.

Accordingly, in bordeaux mixture using water soluble calcium saccharate, said bordeaux mixture prevents plants from fungus harm and supplements calcium to plants and the growth, enlargement and ripeness are promoted and both the preventing function and the fertilizing function are attained, so that the use of calcium saccharate bordeaux mixture is very advantageous for cultivation of plants.

Another important point of calcium saccharate bordeaux mixture is that the handling for preparing the spraying solution is simple.

If the aqueous solution of water soluble calcium

saccharate is subjected to concentration atomizing drying, white powders are obtained and when bordeaux mixture is prepared by using the powders, the preparation is attained by the following process.

Firstly, the total amount of water for bordeaux mixture to be prepared is charged in a vessel, a given amount of copper sulfate is dissolved therein and then the above described calcium saccharate powders containing the given amount of calcium are spread on the solution while stirring the solution. Immediately after mixing, a muddy color tone near the conventional bordeaux mixture is obtained but the color tone simultaneously changes and after 5 minutes at 20°C, a deep blue clear solution is obtained.

As the conventional bordeaux mixture is prepared, calcium saccharate is dissolved in 10-20% of the total amount of water. 80-90% of water is charged in a separate vessel and a given amount of copper sulfate is dissolved therein and then the above described aqueous solution of calcium saccharate is gradually added to the aqueous copper sulfate solution. In this case, the temporary muddy color tone as in the above described process does not appear and the deep blue clear solution is obtained but as the result, the completely same bordeaux mixture is obtained in both the processes, so that the former preparation process is preferable. This brings about the great convenience when a large amount of bordeaux mixture is prepared in the practical

agricultural preventing operation.

Namely, the preparation is attained in only one tank and the chemicals are in turn charged in the tank and stirred. In addition, the preparation operation can be completed in a short time and the spraying can be carried out repidly at the desired time and the labor is saved and the practical merit is very great.

The preparation of the conventional usual bordeaux mixture needs a long time and is troublesome and when comparing with the conventional bordeaux mixture, the great merit can be obtained in the present invention.

The thus obtained bordeaux mixture is a solution of the complex salt having the above described constant composition, so that it is possible to dilute the solution to the desired concentration by adding water.

For example, the 6-6 system bordeaux mixture can be prepared into 3-3 system by adding the double amount of water, but in the preparation of the conventional bordeaux mixture, it is not admitted to add water lately.

Furthermore, the calcium saccharate bordeaux mixture of the present invention is a solution and therefore the pump, and particularly the nozzle are not worn. In addition, it is not necessary to continue stirring during spraying.

In the conventional bordeaux mixture, calcium cake is inevitably mixed in milk of lime and this considerably

wears pump system, particularly nozzle and this has been a great drawback of the conventional bordeaux mixture and this drawback can be completely removed in the present invention.

The present invention will be explained with respect to examples.

Preparation Example 1

To 0.3% of aqueous solution of copper sulfate was added powdery calcium saccharate (mixture ratio by weight of sucrose to CaO:3.2:1) corresponding to 0.2% of CaO (420 g of powdery calcium saccharate dissolved in 50 ℓ of water) and the mixture was stirred at 20°C for 5 minutes to prepare calcium saccharate bordeaux mixture.

The ratio of copper sulfate to CaO in the formed bordeaux mixture is 3:2 and corresponds to 3-2 system of conventional bordeaux mixture.

Preparation Example 2

To 0.3% of aqueous solution of copper sulfate was added an aqueous solution of calcium saccharate (bonding ratio of sucrose and CaO : 4:1, 100 g of CaO is contained in 1 ℓ of the solution) in an amount of 0.3% of CaO (to an aqueous solution of 150 g of copper sulfate in 48.5 ℓ of water is added 1.5 ℓ of calcium saccharate solution) and the mixture was stirred at room temperature for 1 minute to prepare calcium saccharate bordeaux mixture.

The ratio of copper sulfate to CaO in the prepared bordeaux mixture is 3:3, that is 3-3 system of equal amount

of CaO and copper sulfate.

Then, to the prepared calcium bordeaux mixture were added and dissolved 50 g of potassium phosphate (dilution: 1,000 times), 50 g of manganese sulfate (dilution: 1,000 times) and 25 g of boric acid (dilution: 2,000 times).

Preparation Example 3

To 0.8% of aqueous solution of copper sulfate was added an aqueous solution of calcium saccharate (bonding ratio by weight of sucrose to CaO: 4:1, containing 100 g of CaO in 1 ℓ) in an amount corresponding to 0.6% of CaO (to solution of copper sulfate dissolved in 47 ℓ of water was added 3 ℓ of the aqeuous solution of calcium saccharate) and the mixture was stirred at room temperature for 1 minute to prepare calcium saccharate bordeaux mixture.

The ratio of copper sulfate to CaO in the prepared bordeaux mixture was 8:6, which corresponds to 8-6 system of bordeaux mixture.

Preparation Example 4

50 g of potassium phosphate (dilution: 1,000 times), 50 g of manganese sulfate (dilution: 1,000 times), 50 g of potassium chloride (dilution: 1,000 times) and 33 g of boric acid (dilution: 3,000 times) were dissolved in 50 ℓ of water and then 250 g of powdery calcium saccharate (bonding ratio by weight of sucrose to CaO: 4:1) was added thereto and the mixture was stirred for 5 minutes to prepare calcium saccharate nutrient solution for spraying on leaf.

In this case, the solution contains 50 g of CaO (dilution: 1,000 times).

Preparation Example 5

Water soluble calcium saccharate (bonding ratio by weight of sucrose to CaO: 4:1) was dissolved in 49 ℓ of water (containing 100 g of CaO in 1 ℓ of water) in an amount corresponding to 0.2% of CaO (amount of solution after preparation: 50 ℓ).

Thus, 50 ℓ of the solution contains 100 g of CaO (dilution: 500 times).

Test Example 1

The calcium saccharate bordeaux mixture prepared in Preparation Example of 3-2 system was sprayed on young fresh leaves of grape at the leaf developing original stage in an amount of 100 ℓ per 10 are.

Conventional bordeaux mixture of 3-2 system always causes the acute phytotoxicity against the young fresh leaves at this original stage, but the above described calcium saccharate bordeaux mixture did not cause any acute phytotoxicity and the growth of the grape was very sound and the grape leaves were not attached by noxious fungi.

Test Example 2

In order to determine the effect for controlling germination of noxious fungus by using the composition of Preparation Example 1, the observation was made on a slide glass.

The slide glass was firstly rinsed to a sterile state, dried in air and applied with collodion film and the calcium saccharate bordeaux mixture in Preparation Example 1 (3-2 system) was sprayed uniformly on the slide glass with an atomizer of a constant pressure, so that the surface of the slide glass was effectively covered with the sprayed bordeaux mixture particles and dried for 24 hours. Ripe rot (*glomerella cingulate*) isolated from ripened grape attacked by said fungi were cultured on potato agar medium for 10 days to form conidiospores. A suspension of conidiospores was prepared (adding 0.2% of glucose for promoting germination) and the spore concentration was adjusted so that 100 spores were in one field (15W × 10) of a microscope and this suspension was put on the slide glass in five drop number by means of a platinum loop. The thus treated slide glass was immediately put in a moisture chamber maintained at 26°-28°C for 30 hours. Then, the slide glass was taken out and the germination percentage of the fungus was determined by using a microscope.

As the non-treatment test, only water instead of the calcium saccharate bordeaux mixture was sprayed on a slide glass.

The non-treatment test showed the germination percentage of 72.5%, while the calcium bordeaux mixture test (3-2 system) showed no germination and the activity was confirmed.

Test Example 3

The calcium saccharate bordeaux mixture of Preparation Example 2 (3-3 system) was sprayed on grape plant 5 times at an interval of about 10 days from the leaf developing stage to the stage where the grape fruits grew and enlarged and covered with bags in a rate of 100 ℓ per 10 are.

As the comparative test, the conventional bordeaux mixture of 3-3 system was sprayed.

In the use of the conventional bordeaux mixture, leaves, branches and tendrils were attacked by anthracnose (*elsinoe ampelina*) and at the rainy season, black spots were noticeable on the fruits, while in the use of the calcium saccharate bordeaux mixture, leaves, branches and tendrils were not substantially attacked and at the late stage of rainy season, a slight attacking was observed on 1-2 branches in the test zone and no spot was observed on the fruit surface.

From this comparions, it was confirmed that the calcium bordeaux mixture has higher activity than the conventional bordeaux mixture.

The chronic phytotoxicity owing to the repeated spraying appears in variation into yellow of the original leaves or the grown leaves near the original leaves at branches at early and middle in July but at middle in July, the calcium saccharate bordeaux mixture was less than 1/2 of the conventional bordeaux mixture in the yellow variation

and falling down of yellow varied leaves and the yellow varied leaves in the case of use of the calcium bordeaux mixture was within 15% of the total number of branches.

The distinct difference appeared in the chemicals trace and in the conventional bordeaux mixture, the stain of the grape surface was noticeable and the commercial value was considerably lowered, while in the case of use of the calcium saccharate bordeaux mixture, no chemicals traces were observed at the stage of middle in July where the fruits are covered with paper bags even in the repeated spraying and the blooms were satisfactorily formed.

Furthermore, the grape shows KRAUS,E.Z. & KRAYBILL, H.R. III type growth tendency by addition of the slight amount of nutrient and nutrient salts as disclosed in Preparation Example 2 and the leaf color was green with slight yellow and the internode was short and the grape plant grew fast.

Sucrose isolated in reaction in preparation of calcium saccharate bordeaux mixture bonded to boric acid and was absorbed from leaf surface and the occurrence of fly speck (*leptothyrium pomi*) due to saccharide was not found.

Test Example 4

The calcium saccharate bordeaux mixture of Preparation Example 3 (8-6 system) was sprayed in a rate of 100 ℓ per 10 are prior to covering of enlarged fruits with paper bags as the calcium saccharate bordeaux mixture having the

enough concentration to prevent ripe rot and anthracnose.

According to the determination at the harvesting time of September, the fruits attacked by ripe rot were very few and were only 1-2 granules in the attacked cluster. Accordingly, there was no practical damage and the activity was confirmed.

Test Example 5

Although the spraying of the slight amount nutrients on leaf surface is very effective but many nutrients among them show the acidity in the aqueous solutions and there is fear that the phytotoxicity occurs.

Even in Preparation Example 4, pH of the aqueous solution prior to addition of calcium saccharate showed 5.8 but when the composition in said Example 4 was diluted by addition of calcium saccharate in 1,000 times, pH increased to 11.5 and the resulting preparation was able to be safely sprayed and the use of the calcium saccharate solved the problem of the chemicals trace.

Test Example 6

The aqueous solution of the water soluble calcium saccharate in Preparation Example 5 was sprayed twice on the young fresh leaves at the early stage in a rate of 100 ℓ per 10 are. In this case, the thickness of the leaves increased 20% as compared with the thickness of the leaves not sprayed and the photosynthesis was excellent and the better growth was obtained.

The spraying at the middle stage and the late stage was noticeable in the effect for enlarging and ripening of the fruits. When said solution was sprayed twice at middle in June and middle in July, the suger content at late in August was 21° and the sugar content at middle in September was more than 22° by Brixmeter.

In the growing course of tomato, blossom-end rot was caused at the fruit surface and this was considered due to the deficiency of calcium, so that when the aqueous solution of calcium saccharate in Preparation Example 5 was sprayed on the leaf surface in a rate of 150 ℓ per 10a, blossom-end rot was not observed on the formed fruits and the enlarged fruits thereafter, so that the fertilizing activity of calcium was confirmed.

Furthermore, the aqueous solution of calcium saccharate did not remain any chemicals trace and the utility was proved.

## Industrial Applicability

As mentioned above, bordeaux mixture in the present invention obtained by mixing calcium saccharate, particularly water soluble calcium saccharate with an aqueous solution of copper sulfate is useful as a non-staining fungicide.

Furthermore, calcium saccharate is high in the alkalinity and has a high buffering ability and can be used as pH correcting agent for aqueous solutions of acidic agents for spraying on an plant leaf surfaces.

In addition, the aqueous solution of water soluble calcium saccharate is useful as a calcium supplementing agent to be sprayed on plant leaf surfaces and as a fertilizer which is applied on soil and absorbed through roots.

## Claims

1. Substantially blue clear agricultural fungicidal bordeaux mixture produced by reacting calcium saccharate with an aqueous solution of copper sulfate in such an amount that bordeaux mixture having the desired concentration is obtained.

2. Bordeaux mixture as claimed in claim 1, wherein acidic nutrient salts or fungicides for plants are added thereto.

3. Bordeaux mixture as claimed in claim 1 or 2, wherein the molar ratio of sucrose to CaO in calcium saccharate is 1:1-3.

4. Brodeaux mixture as claimed in claim 1 or 2, wherein the molar ratio of copper sulfate to CaO in calcium saccharate is 8: more than 13.

5. A process for producing bordeaux mixture having a given concentration, which comprises preparing an aqueous solution of copper sulfate having a given concentration and then adding powdery or liquid calcium saccharate thereto and stirring and reacting the mixture.

6. Plant nutrients or fungicides controlled in pH by adding calcium saccharate to acidic spraying plant nutrient salts or fungicides.

7. Plant nutrients as claimed in claim 6, wherein the acidic spraying plant nutrient salts are at least one of boric acid, potassium primary phosphoric acid, calcium primary phosphoric acid, magnesium sulfate, zinc sulfate, iron sulfate and manganese sulfate.

8. Agricultural fungicides as claimed in claim 6, wherein the acid fungicide is copper acetate.

9. Plant nutrients to be sprayed on plant leaf surfaces as claimed in claim 6, wherein water soluble calcium saccharate of an amount exceeding the amount necessary for correcting pH is added.

10. Calcium supplementing agent to be sprayed on plants consisting of an aqueous solution of water soluble calcium saccharate.

Amendment of claim based on the
provisions of Articles 19 of the PCT

10. (Amended) Calcium supplementing agent to be sprayed on plants consisting of water soluble calcium saccharate.

# INTERNATIONAL SEARCH REPORT

0007307

International Application No PCT/JP78/00059

**I. CLASSIFICATION OF SUBJECT MATTER** (if several classification symbols apply, indicate all) [3]

According to International Patent Classification (IPC) or to both National Classification and IPC

A 01 N 11/04

**II. FIELDS SEARCHED**

Minimum Documentation Searched [4]

| Classification System | Classification Symbols |
|---|---|
| IPC | A 01 N 9/00, A 01 N 11/04<br>C 05 D 3/00, C 05 D 3/02 |

Documentation Searched other than Minimum Documentation to the Extent that such Documents are Included in the Fields Searched [5]

S.Tanaka "A lecture on Agricultural chemicals" (1956-1-15) Yokendo

**III. DOCUMENTS CONSIDERED TO BE RELEVANT** [14]

| Category * | Citation of Document, [16] with indication, where appropriate, of the relevant passages [17] | Relevant to Claim No. [18] |
|---|---|---|
| X | S. Tanaka "A lecture on Agricultural chemicals" (1956-1-15) Yokendo page 61-62 | 1-5 |
| X | GB, A, 1,078,099 , 1967-8-2<br>Calumet & Hecla, Inc. | 1-5 |
| A | JP, B1, 37-15640, 1962-10-1<br>Dai Nippon Seito Co. | 1-5 |
| A | JP, B1, 43-22206, 1968-9-24<br>see line 16, right-hand column, page 1<br>Otsuka Chemical Co. | 6-10 |

* Special categories of cited documents: [15]

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

**IV. CERTIFICATION**

| Date of the Actual Completion of the International Search [2] | Date of Mailing of this International Search Report [2] |
|---|---|
| 16 March 1979 (16.03.79) | 26 March 1979 (26.03.79) |
| **International Searching Authority [1]** | **Signature of Authorized Officer [20]** |
| Japanese Patent Office | |

Form PCT/ISA/210 (second sheet) (October 1977)